# EUROPEAN PATENT APPLICATION

(11) **EP 1 752 320 A1**
(43) Date of publication of application: **14.02.2007**
(21) Application number: 05425594.8
(22) Date of filing: 12.08.2005
(51) Int. Cl.: B60C 27/12

(54) **Snow chain with elastic mounting system**

(71) Applicant: Thule S.p.A., 23847 Molteno (Lecco) (IT)
(72) Inventor: Franchini, Giovanni, 21047 Saronno (VA) (IT); Arrigoni Neri, Marco, 23811 Ballabio (Lecco) (IT)
(74) Representative: Petruzziello, Aldo

(57) **Abstract**

A snow chain (2) comprises: an inner ring (3) closed on the side of the wheel destined to face towards the inside of the vehicle, an outer ring (4) designed to be closed on the side of the wheel destined to face towards the outside of the vehicle and a series of portions (10) of anti-skid chain, disposed on the tread of the tyre (1) of the wheel, which join the outer ring (4) and the inner ring (3).

The inner ring (3) is closed in advance and is elastic so as to be able to be widened elastically and to be fitted on the wheel of the vehicle and to retract elastically so as to be disposed tightly on the inward facing side of the tyre (1).

## Description

The present invention refers to anti-skid devices for snow chains designed to be mounted on vehicle tyres.

When a vehicle travels on a road surface covered with snow, sleet or ice, its tyres do not have a good grip and dangerous side slipping or skidding of the vehicle can occur. To avoid these problems it is customary to use anti-skid devices, commonly called snow chains.

Snow chains, normally mounted on the driving wheels of the vehicle, bite into the snow and/or the ice deposited on the road surface, increasing the tread traction and allowing the vehicle tyres to achieve a good grip.

As is known, a snow chain generally consists of two side members (chains, flexible cables, steel wires, ropes or the like) which during the use are closed in a ring on the inner side and the outer side of the wheel and which will be referred to herein as the inner ring and outer ring. These side members are connected by a series of chain portions, variously disposed, to achieve the tread traction, the whole being completed by a tensioning device for said members, known as a tensioner.

Types of chains widely available on the market have an inner side portion consisting of a flexible inner ring that can be opened to achieve widening thereof during the fitting, so that it can be applied to the inner side of the wheel of the vehicle. Said inner ring normally consists of a metal cable covered by a continuous or discontinuous sheath.

Said chains of the prior art have an inner locking closure whereby one end of the cable of the inner ring is provided with hollow, elongated engagement means, a portion thereof being able to receive a head provided at the other end of the cable and another portion thereof being able to retain said head, a channel that allows the movement of the cable along said engagement means so that the head is locked within the locking portion being provided.

This chain mounting system, and in particular the type of inner closure described above is not intuitive to the user, who is required to follow the mounting instructions carefully. Consequently, this operation of mounting the chains proves to be excessively slow and tiresome.

Object of the present invention is to eliminate the drawbacks of the prior art, providing a snow chain that is versatile, suitable to be fitted on various types of vehicle wheels and extremely simple and intuitive to be mounted by the user.

Another object of the present invention is to provide such a snow chain that is safe, practical, easy to use, economical and simple to make.

These objects are achieved in accordance with the invention with the characteristics listed in appended independent claim 1.

Advantageous embodiments of the invention are apparent from the dependent claims.

The snow chain according to the invention comprises:
- an inner ring, that can be closed on the side of the wheel destined to face towards the inside of the vehicle,
- an outer ring, that can be closed on the side of the wheel destined to face towards the outside of the vehicle, and
- a series of portions of anti-skid chain, disposed on the tyre tread, which joins the outer ring and the inner ring.

The inner ring is closed in advance and is elastic so that it can be elastically widened and fitted on the vehicle wheel and it retracts elastically so as to be disposed tightly on the inward facing side of the vehicle tyre.

This system allows the snow chain to be mounted on the wheel in an extremely intuitive manner by the user and without the need to work on the side of the wheel facing towards the inside of the vehicle to close the inner ring.

Furthermore, it is made possible to tension or to clamp the inner ring by acting on the outer side of the wheel.

Further characteristics of the invention will be made clearer by the detailed description that follows, referring to a purely exemplifying and therefore non limiting embodiment thereof, illustrated in the appended drawing, in which:
Figure 1 is a side view illustrating a snow chain according to the invention fitted on a tyre of a wheel shown from the inward facing side;
Figure 2 is an enlarged view of a detail of the inner ring of the snow chain according to the invention illustrated in Figure 1;
Figure 3 is a plan view of a tensioning or clamping device for the inner ring of the snow chain of Figure 1;
Figure 4 is a perspective view illustrating a step of the mounting of the snow chain according to the invention.

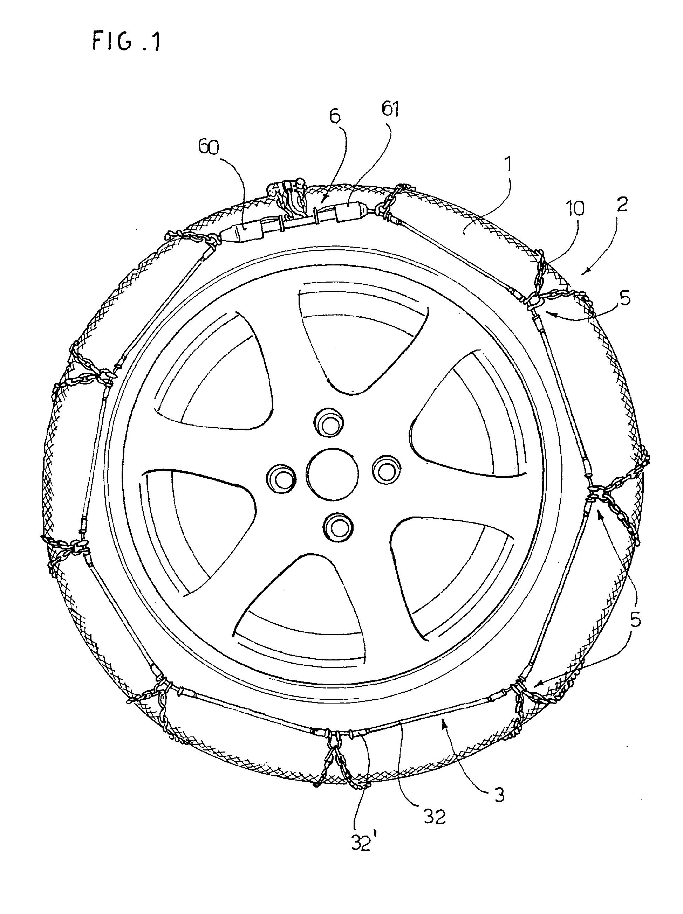

Figure 1 shows a vehicle wheel provided with a tyre 1 on which a snow chain, indicated as a whole with the reference numeral 2, is fitted as an anti-skid device.

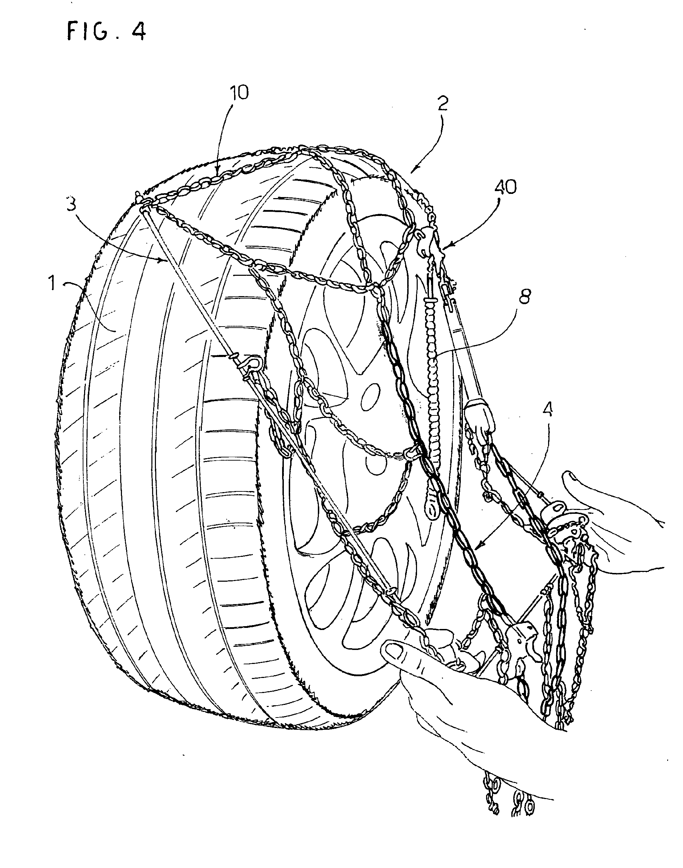

The chain 2 comprises:
- a member 3 which can be closed in a circle or in a ring on the side of the wheel destined to face towards the inside of the vehicle, henceforth called the inner ring 3,
- a member 4 (shown in Figure 4) which can be closed in a circle or in a ring on the side of the wheel destined to face toward the outside of the vehicle, henceforth called outer ring 4, and
- a series of portions 10 of anti-skid chain, variously disposed on the tread of the tyre 1 of the wheel, which join the outer ring 4 and the inner ring 3.

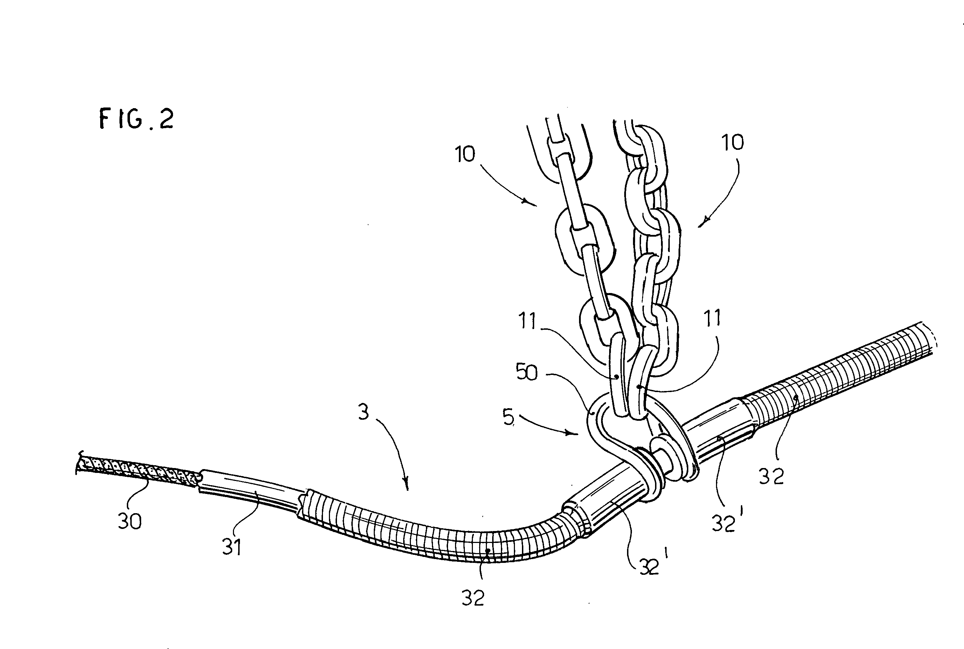

As shown better in Figure 2, the inner ring 3 comprises a core 30 consisting, for example, of a continuous wire or of a plurality of twisted or plaited wires. A flexible plastic sheath 31 is optionally fitted over the core 30.

A hollow annular element 32, continuous or discontinuous and at least partially elastic, is disposed on the sheath 31; in the embodiment shown in the figures this annular element consists of a plurality of hollow cylindrical portions 32 (Figure 1). Thus the hollow cylindrical portions 32 act as a support for the core 30 which can slide therein, and at the same time they can dilate and retract elastically.

Alternatively, the core 30 can slide on the outside of the at least partially elastic annular element.

With reference again to Figure 2, the end links 11 of the two portions of chain 10 are connected to the inner ring 3 by means of a connecting element 5 in the form of a bush.

The connecting element 5 is obtained from a metal bar with substantially the same section as the links of the portions of chain. This bar is bent in U-shape forming a curved part 50 in the central position to contain the two end links 11 of the portions of chain 10. The bar is then bent in U-shape near its ends, around the sheath 31 of the core 30, so as to form another two curved parts 51 on planes at right angles to that of the first curved part 50.

It should be noted that the connecting element 5 is free to rotate around the sheath 31 of the elastic core and that the end links 11 of the portions of chain 10 are free to rotate around the curved part 50 of the connecting element 5.

In the embodiment illustrated, the heads 32' of the cylindrical elastic portions 32 are constrained to the connecting elements 5, but it is obvious that other embodiments are possible.

Returning to Figure 1, the inner ring 3 is closed by means of a closing device 6. The closing device 6 comprises two engagement elements 60 and 61 wherein the end portions of the core 30 of the elastic inner ring can slide.

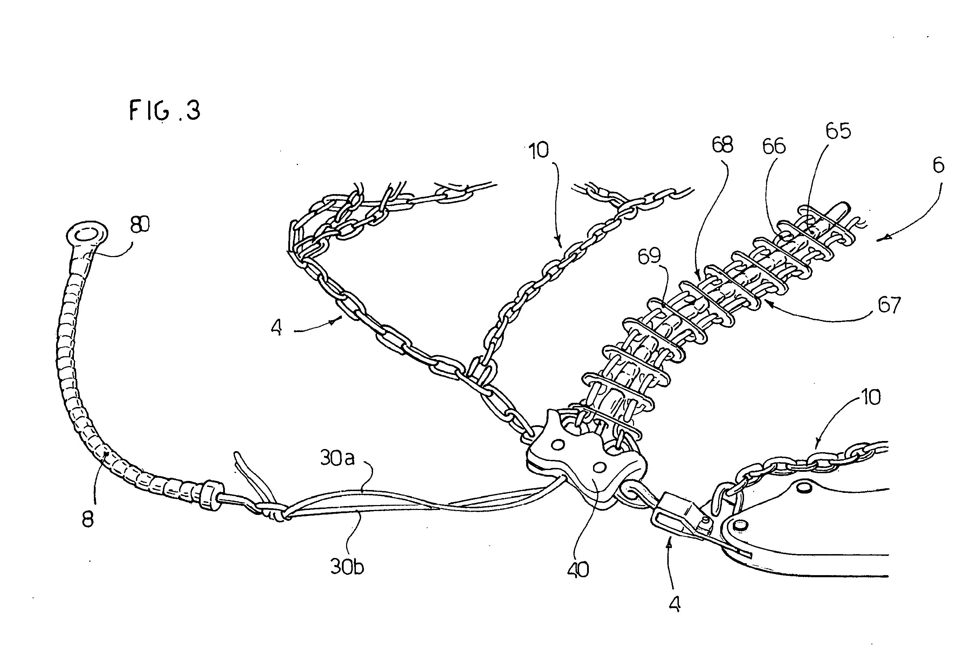

As shown in Figure 3, the terminal portions 30a and 30b of the core of the inner elastic ring are made to exit the two engagement elements 60 and 61 of the closing device 6 to be brought onto the outward facing side of the wheel. In this manner the terminal portions 30a and 30b of the core of the elastic inner ring can easily be pulled and suitably locked by the user to tension or to clamp the inner ring.

The terminal portions 30a and 30b of the core of the elastic inner ring advantageously are inserted into a tube 65 formed by a series of small cylinders not connected to each other. The tube of small cylinders 65 is disposed between two portions of chain 67 and 68. The portions of chain 67 and 68 and the tube of small cylinders 65 are disposed inside elongated elliptical links 69 arranged spaced apart from one another and destined to rest edgeways on the tyre 1 of the wheel.

The portions of chain 67 and 68 and the tube of small cylinders 65 end in a connecting block 40 connected to the outer ring 4 of the snow chain 2. The terminal portions 30a and 30b of the core 30 of the elastic inner ring 3, which are connected to a terminal portion 8 accessible to the user, protrude from the connecting block 40. Therefore, the user pulls the terminal portion 8 so as to tension or to clamp the inner ring 3 and then hooks the end 80 of the terminal portion 8 to the outer ring 4 to lock it.

The terminal portion 8 advantageously consists of a plurality of frustoconical elements or of a chain. In a per se known manner, the terminal portion 8 is made to pass through a no-return block or ratchet (not shown) which allows the terminal portion 8 to slide only in the tensioning direction, preventing it from sliding in the loosening direction. The end 80 of the terminal portion 8 is then hooked to a tie-rod of a self-tensioning device (not shown) which pulls the terminal portion 8 in the tensioning direction.

As shown in Figure 4, the mounting of the snow chain 2 according to the invention is extremely intuitive and therefore rapid and convenient. In fact the user must only stretch the elastic inner ring 3 and fit the snow chain on the top part of the tyre 1, that is to say on the wall distal from that which rests on the ground, making sure that the elastic inner ring 3 faces towards the inside of the vehicle.

Subsequently, by turning the wheel one time, the inner ring 3 retracts elastically and it is disposed in a ring along the inward facing side of the tyre. At this point the user, acting on the side of the wheel facing toward the outside of the vehicle, has only to pull the terminal portion 8 connected to the ends of the inner ring 3 to tension it and then to hook the end 80 of the terminal portion 8 to the outer ring 4, for example to the tie-rod of the self-tensioning device, to lock it.

Numerous changes and variations of detail within the reach of a person skilled in the art can be made to the present embodiment of the invention, without thereby departing from the scope of the invention as set forth in the appended claims.

## Claims

1. A snow chain (2) comprising:
- an inner ring (3) which can be closed on the side of the wheel destined to face towards the inside of the vehicle,
- an outer ring (4) designed to be closed on the side of the wheel destined to face towards the outside of the vehicle, and
- a series of portions of anti-skid chain (10), disposed on the tread of the tyre (1) of the wheel, which join the outer ring (4) and the inner ring (3),
**characterised in that**
said inner ring (3) is closed in advance and is elastic so as to be able to be elastically widened and to be fitted on the wheel of the vehicle and to retract elastically so as to be disposed tightly on the side of the tyre (1) facing towards the inside of the vehicle.

2. A snow chain (2) according to claim 1, **characterised in that** said inner ring (3) comprises a continuous or discontinuous annular element (32), at least partially elastic, and a core (30) consisting of at least one wire.

3. A snow chain (2) according to claim 2, **characterised in that** said core (30) slides inside said annular element (32), which is a continuous or discontinuous hollow cylinder.

4. A snow chain (2) according to claim 2, **characterised in that** said core (30) is alongside said at least partially elastic annular element (32).

5. A snow chain (2) according to any one of claims 2 to 4, **characterised in that** a protective sheath (31) of flexible material is disposed on said core (30).

6. A snow chain according to any one of claims 2 to 5, **characterised in that** it comprises a closing device (6) designed to close said inner ring (3), at least one terminal portion (30a, 30b) of said core exiting from said closing device (6) to be brought into a position accessible to the user for tensioning or for clamping the inner ring (3).

7. A snow chain (2) according to claim 6, **characterised in that** said closing device (6) comprises two engagement elements (60, 61) engageable with each other and through which the two terminal portions (30a, 30b) of said core of the inner ring pass.

8. A snow chain (2) according to claim 6 or 7, **characterised in that** said at least one terminal portion (30a, 30b) of the core of the inner ring protruding from said closing device (6) of the inner ring is made to pass inside a tube of small cylinders (65) which is connected to a connecting block (40) connected to the outer ring (4) of the snow chain so as to cross the tyre (1) transversally, said at least one terminal portion (30a, 30b) exiting from said connecting block (40) of the outer ring (4) to connect to a terminal portion (8) accessible to the user at the side of the wheel facing towards the outside of the vehicle.

9. A snow chain (2) according to claim 8, **characterised in that** said tube of small cylinders (65) is disposed between two portions of chain (67, 68) and **in that** said tube of cylinders (65) and said two portions of chain (67, 68) are inserted in elliptical links (69) spaced apart from each other and resting edgeways on the tyre (1).

10. A snow chain (2) according to claim 8 or 9, **characterised in that** said terminal portion (8) connected to said at least one terminal portion (30a, 30b) of the core of the inner ring comprises a plurality of frustoconical elements (8) or a chain and is able to be inserted inside a no-return block which allows it to slide in the tensioning direction, preventing it from sliding in the loosening direction of the inner ring (3).

## Amended claims

### Amended claims in accordance with Rule 86(2) EPC.

**1.** A snow chain (2) comprising:
- an inner ring (3) which can be closed in advance on the side of the wheel destined to face towards the inside of the vehicle, by means of a closing device (6),
- an outer ring (4) designed to be closed on the side of the wheel destined to face towards the outside of the vehicle, and
- a series of portions of anti-skid chain (10), disposed on the tread of the tyre (1) of the wheel, which join the outer ring (4) and the inner ring (3),
**characterised in that**
- said inner ring (3) comprises a continuous or discontinuous annular element (32), at least partially elastic, and a core (30) consisting of at least one wire which can slide with respect to said at least partially elastic element (32) and has at least one terminal portion (30a, 30b) exiting from said closing device (6) so that said inner ring (3) is able to be elastically widened and to be fitted on the wheel of the vehicle and to retract elastically so as to be disposed tightly on the side of the tyre (1) facing towards the inside of the vehicle, and that said at least one terminal portion (30a, 30b) of said core is accessible to the user for tensioning or for clamping the inner ring (3).

**2.** A snow chain (2) according to claim 1, **characterised in that** said core (30) slides inside said annular element (32), which is a continuous or discontinuous hollow cylinder.

**3.** A snow chain (2) according to claim 1 or 2, **characterised in that** said core (30) slides alongside said at least partially elastic annular element (32).

**4.** A snow chain (2) according to any one of claims 1 to 3, **characterised in that** a protective sheath (31) of flexible material is disposed on said core (30).

**5.** A snow chain (2) according to any one of claims 1 to 4, **characterised in that** said closing device (6) comprises two engagement elements (60, 61) engageable with each other and through which the two terminal portions (30a, 30b) of said core of the inner ring pass.

**6.** A snow chain (2) according to any one of claims 1 to 5, **characterised in that** said at least one terminal portion (30a, 30b) of the core of the inner ring protruding from said closing device (6) of the inner ring is made to pass inside a tube of small cylinders (65) which is connected to a connecting block (40) connected to the outer ring (4) of the snow chain so as to cross the tyre (1) transversally, said at least one terminal portion (30a, 30b) exiting from said connecting block (40) of the outer ring (4) to connect to a terminal portion (8) accessible to the user at the side of the wheel facing towards the outside of the vehicle.

**7.** A snow chain (2) according to claim 6, **characterised in that** said tube of small cylinders (65) is disposed between two portions of chain (67, 68) and **in that** said tube of cylinders (65) and said two portions of chain (67, 68) are inserted in elliptical links (69) spaced apart from each other and resting edgeways on the tyre (1).

**8.** A snow chain (2) according to claim 6 or 7, **characterised in that** said terminal portion (8) connected to said at least one terminal portion (30a, 30b) of the core of the inner ring comprises a plurality of frustoconical elements (8) or a chain and is able to be inserted inside a no-return block which allows it to slide in the tensioning direction, preventing it from sliding in the loosening direction of the inner ring (3).
